# EUROPÄISCHE PATENTANMELDUNG

(11) **EP 2 009 290 A1**
(43) Veröffentlichungstag der Anmeldung: **31.12.2008**
(21) Anmeldenummer: 07012621.4
(22) Anmeldetag: 27.06.2007
(51) Int. Cl.: F04D 29/42, F04D 29/66, F02C 7/04, F04D 29/053

(54) **Nasenhaube für einen Turbomaschinenrotor**

(71) Anmelder: SIEMENS AKTIENGESELLSCHAFT, 80333 München (DE)
(72) Erfinder: Mönk, Thomas, Dr., 45896 Gelsenkirchen (DE); Spanel, Axel, 47228 Duisburg (DE); Zacharias, Wolfgang, 47198 Duisburg (DE)

(57) **Zusammenfassung**

Eine Nasenhaube für einen Turbomaschinenrotor, der ein zu einer Lagerstelle des Turbomaschinenrotors fliegend angeordnetes Laufrad aufweist, ist zur Führung einer axialen Zu- und/oder Abströmung des Laufrads an dieses axial anschließbar und weist eine Kopplungseinrichtung auf, mit der das Laufrad und die Nasenhaube radial mechanisch koppelbar sind, so dass das Schwingungsverhalten des Turbomaschinenrotors beeinflussbar ist. Die Turbomaschine mit dem Turbomaschinenrotor weist die Nasenhaube auf, wobei das Laufrad und die Nasenhaube mittels der Kopplungseinrichtung radial gekoppelt sind, so dass die Schwingung des Turbomaschinenrotors gedämpft ist.

## Beschreibung

Die Erfindung betrifft eine Nasenhaube für einen Turbomaschinenrotor und eine Turbomaschine mit einem Turbomaschinenrotor, der die Nasenhaube aufweist.

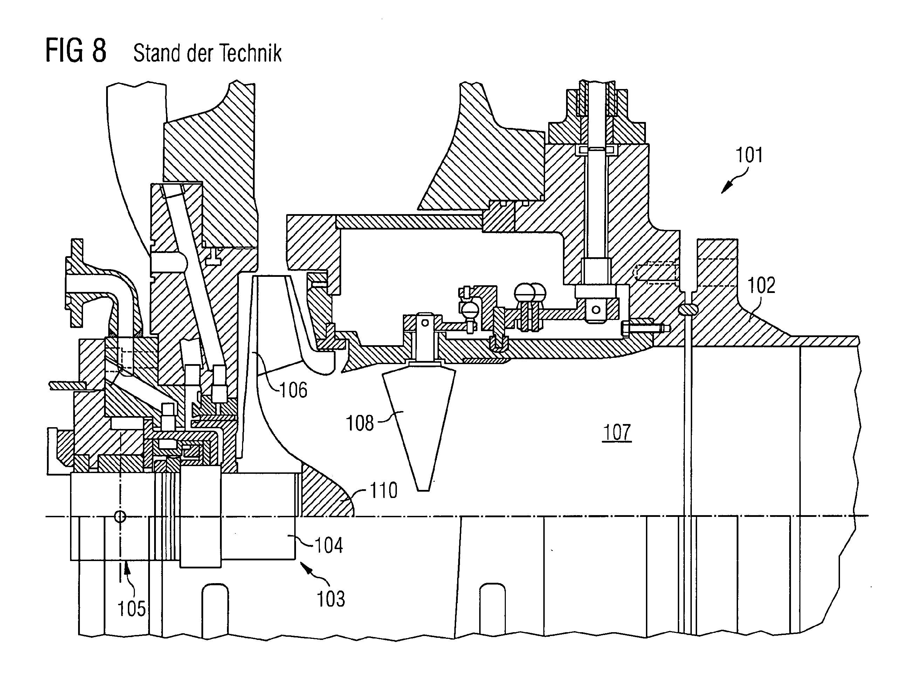

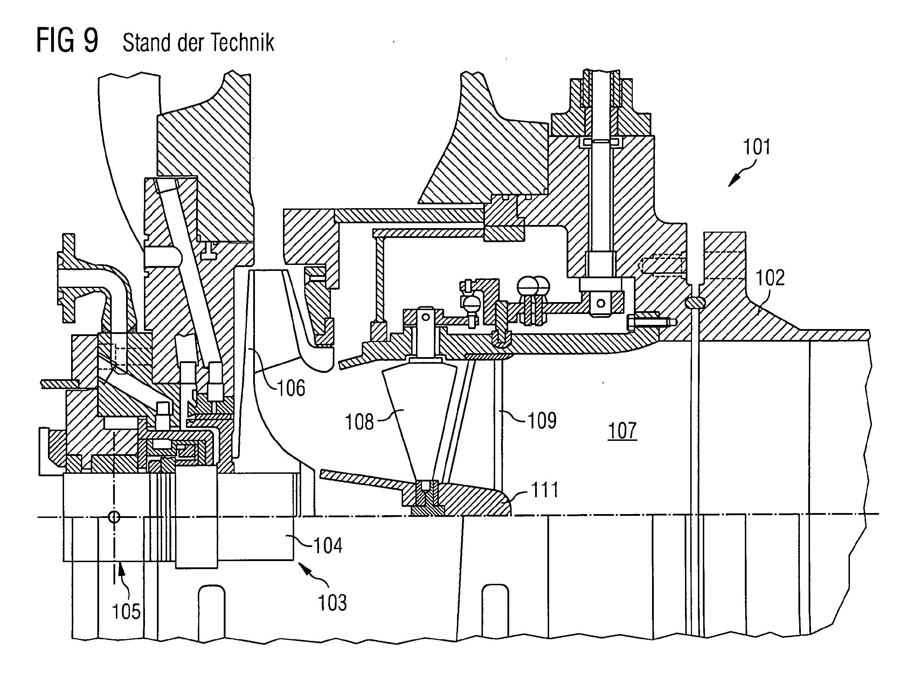

Eine Turbomaschine ist beispielsweise ein herkömmlicher Turboverdichter 101, wie er in Fig. 8 und 9 gezeigt ist. Der Turboverdichter 101 weist ein Gehäuse 102 und einen Turboverdichterrotor 103 auf, der von dem Gehäuse 102 umgeben ist. Der Turboverdichterrotor 103 weist eine Welle 104 auf, die an einer Lagerstelle 105 an dem Gehäuse 102 abgestützt ist. Ferner weist der Turboverdichterrotor 103 ein Laufrad 106 auf, das zu der Lagerstelle 105 fliegend angeordnet ist. Das Laufrad 106 ist ein Radialverdichterlaufrad, dessen Zuströmung in Axialrichtung der Welle 104 und dessen Abströmung in Radialrichtung der Welle 104 verläuft. Die Zuströmung wird in einem in Axialrichtung der Welle 104 verlaufenden Einlaufkanal 107 des Turboverdichters 101 geführt, so dass die Zuströmung in Axialrichtung der Welle 104 auf das Laufrad 106 trifft. Zur Manipulation der Zuströmung, beispielsweise zum Beaufschlagen der Zuströmung mit Drall, ist in dem Einlaufkanal 107 eine Vielzahl von verstellbaren Leitschaufeln 108 angeordnet, wobei die verstellbaren Leitschaufeln 108 zu einem Schaufelkranz zusammengefasst sind.

Wie es in Fig. 8 gezeigt ist, ist der Nabenbereich der Leitschaufel 108 mit einer Nasenhaube 110 versehen, die an dem Laufrad 106 befestigt ist und somit mit dem Laufrad 106 mit rotiert. Die Nasenhaube 110 ist aerodynamisch geformt und dient dazu den Störeinfluss des Nabenbereichs des Laufrads 106 in der Zuströmung möglichst gering zu halten.

Wie es in Fig. 9 gezeigt ist, kann alternativ zur rotierenden Nasenhaube 110 eine stationäre Nasenhaube 111 im Bereich des Nabenbereichs des Laufrads 106 vorgesehen sein. Die Nasenhaube 111 ist von einer Strebe 109, die an dem Einlaufkanal 107 befestigt ist, in Position gehalten. Die Nasenhaube 111 ist ebenfalls aerodynamisch geformt, um die Zuströmung zu dem Laufrad 106 möglichst nicht zu stören. Ferner ist die Strebe 109 aerodynamisch geformt, um den Störeinfluss der Strebe 109 auf die Zuströmung möglichst gering zu halten. Die Strebe 109 ist stromauf der verstellbaren Leitschaufel 108 angeordnet und die stationäre Nasenhaube 111 ist in Axialrichtung der Welle 104 länger als die rotierende Nasenhaube 110 ausgebildet. Zwischen dem Laufrad 106 und der stationären Nasenhaube 111 findet beim Betrieb des Turboverdichters 101 eine Relativbewegung statt. Die Nasenhaube 111 ist im Abstand von dem Laufrad 106 angeordnet, so dass das Laufrad 106 nicht mit der stationären Nasenhaube 111 in Kontakt kommen und somit daran nicht schleifen und beschädigen kann.

Die Rotordynamik des Turboverdichterrotors 103, d.h. das dynamische Schwingungsverhalten des Turboverdichterrotors 103 beim Betrieb des Turboverdichters 101, hängt im Wesentlichen von der Geometrie und der konstruktiven Gestaltung des Turboverdichterrotors 103 und den der Lagerstelle 105 inhärenten dynamischen Eigenschaften, insbesondere der Steifigkeit und der Dämpfung der Lagerstelle 105, ab. Herkömmlich ist die Lagerstelle 105 von einem Kippsegmentgleitlager gebildet, das entsprechend seiner Auslegung, Konstruktion und seines Betriebs die entsprechende Steifigkeit und die entsprechende Dämpfung hat. Beim Hochfahren des Turboverdichterrotors 103 auf seine Betriebsdrehzahl passiert der Turboverdichterrotor 103 in der Regel mindestens eine kritische Drehzahl. Um eine Beschädigung des Turboverdichterrotors 103 beim Durchfahren der kritischen Drehzahl abzuwenden, hat die radiale Schwingungsamplitude des Turboverdichterrotors 103 stets in konstruktiv vorgegebenen Grenzen zu liegen. Diese Grenzen können dann eingehalten werden, wenn die Rotordynamik des Turboverdichterrotors 103 entsprechend eingestellt ist, insbesondere durch die Geometrie und die konstruktive Gestaltung des Turboverdichterrotors 103 und der Steifigkeit und der Dämpfung der Lagerstelle 105.

Hervorgerufen durch die fliegende Lagerung des Laufrads 106 sind an dem Laufrad 106 beim Durchfahren der kritischen Drehzahl häufig hohe radiale Schwingungsamplituden zu verzeichnen. Dadurch ist der Turboverdichterrotor 103 mit seinem fliegend gelagerten Laufrad 106 aus rotordynamischer Sicht häufig schwer zu beherrschen.

Außerdem ist bekannt, dass insbesondere bei hohen Gasdichten eine Interaktion des Verdichterrotors mit dem verdichteten Gas in selbsterregte Schwingungen des Rotors resultieren kann, welche zur Zerstörung der Maschine führen können. Diesem Phänomen wird durch eine rotordynamisch günstige Konstruktion begegnet, wobei bisher nur die Drehzahl und die Massenverteilung des Rotors sowie die Dämpfung und die Steifigkeit der Lagerung zu variierende Parameter sind.

Aufgabe der Erfindung ist es, eine Nasenhaube für einen Turbomaschinenrotor und eine Turbomaschine mit dem Turbomaschinenrotor, der die Nasenhaube aufweist, zu schaffen, wobei die Turbomaschine ein ausgeglichenes rotordynamisches Verhalten hat und somit sicher betreibbar ist.

Die erfindungsgemäße Nasenhaube für einen Turbomaschinenrotor, der ein zu einer Lagerstelle des Turbomaschinenrotors fliegend angeordnetes Laufrad aufweist, ist zur Führung einer axialen Zu- und/oder Abströmung des Laufrads an dieses axial anschließbar und weist eine Kopplungseinrichtung auf, mit der das Laufrad und die Nasenhaube radial mechanisch koppelbar sind, so dass das Schwingungsverhalten des Turbomaschinenrotors beeinflussbar ist.

Die erfindungsgemäße Turbomaschine weist einen Turbomaschinenrotor, der ein zu der Lagerstelle des Rotors fliegend angeordnetes Laufrad aufweist, und die Nasenhaube auf, wobei das Laufrad und die Nasenhaube mittels der Kopplungseinrichtung radial gekoppelt sind, so dass das Schwingungsverhalten des Turbomaschinenrotors beeinflussbar ist.

Dadurch wird vorteilhaft erreicht, dass zusätzlich zu der Auslegung der Lagerstelle und der geometrischen Gestaltung des Turbomaschinenrotors mittels der Kopplungseinrichtung das rotordynamische Verhalten des Turbomaschinenrotors bestimmbar bzw. beeinflussbar ist.

Die Nasenhaube greift mit der Kopplungseinrichtung an dem Laufrad an, das bezüglich der Lagerstelle fliegend gelagert ist. Aufgrund der fliegenden Lagerung des Laufrads liegt bezogen auf die Lagerstelle für die Kopplungseinrichtung ein günstiger Hebelarm zur Beeinflussung des rotordynamischen Verhaltens des Turbomaschinenrotors vor. Dadurch ist das rotordynamische Verhalten des Turbomaschinenrotors durch die Nasenhaube effektiv und günstig beeinflussbar.

Somit ist die Schwingung des Turbomaschinenrotors im Betrieb mittels der Kopplungseinrichtung dämpfbar, so dass die maximale Schwingungsamplitude beim Betrieb des Turbomaschinenrotors niedrig ist. Beim Betrieb der Turbomaschine mit Gasen mit einer hohen Dichte kann die Schwingungsamplitude des Turbomaschinenrotors so groß sein, dass der Betrieb der Turbomaschine mit diesen Gasen zu einer Beschädigung der Turbomaschine führt. Aufgrund der Dämpfungseigenschaft der Kopplungseinrichtung ist jedoch die Schwingungsamplitude des Turbomaschinenrotors niedrig, so dass die erfindungsgemäße Turbomaschine auch mit diesen Gasen mit hoher Dichte bei hoher Betriebssicherheit betrieben werden kann. Dadurch ist durch das Vorsehen der erfindungsgemäßen Nasenhaube in der erfindungsgemäßen Turbomaschine die Umsetzung von neuen Maschinenkonzepten möglich, insbesondere bei Einsatzbereichen mit Gasen mit hoher Gasdichte, wie beispielsweise auf einen hohen Druck verdichtetes Kohlendioxid.

Die Nasenhaube stellt somit ein zusätzliches Konstruktionselement dar, mit dem die Dämpfung des Schwingungssystems günstig beeinflusst werden kann.

Es ist bevorzugt, dass das Laufrad eine von außen zugängliche Wellenbohrung mit einer zylindrischen Innenwand aufweist und die Kopplungseinrichtung einen Vorsprung mit einer zylindrischen Außenwand, der in die Wellenbohrung unter Ausbilden eines zylindrischen Ringspalts zwischen der Außenwand des Vorsprungs und der Innenwand der Wellenbohrung einsetzbar ist, und eine Beaufschlagungseinrichtung aufweist, mit der der Ringspalt zum Dämpfung der Schwingung des Turbomaschinenrotors mit Beaufschlagungsgas beaufschlagbar ist.

Dadurch wird mit einer Strömung des Beaufschlagungsgases durch den Ringspalt ein ringförmiges, zylindrisches Gaspolster zwischen dem Vorsprung der Nasenhaube und dem Laufrad erzielt. Das Gaspolster weist eine Dämpfungseigenschaft auf, mit der die Schwingung des Turbomaschinenrotors gedämpft werden kann. Mittels der Beaufschlagungseinrichtung kann die Strömung des Beaufschlagungsgases vorbestimmt sein, so dass die Dämpfungseigenschaft des Gaspolsters einstellbar ist. Zwischen dem Laufrad und dem Vorsprung der Nasenhaube ist der Ringspalt vorgesehen, so dass trotz der Dämpfungskopplung zwischen dem Laufrad und der Nasenhaube das Laufrad mit der Nasenhaube nicht in Kontakt steht. Von daher sind das Laufrad und die Nasenhaube berührungsfrei mechanisch gekoppelt, so dass ein mechanischer Verschleiß im Bereich der Kopplungseinrichtung an dem Laufrad und der Nasenhaube unterbunden ist.

Bevorzugt ist, dass die Beaufschlagungseinrichtung ein in der Nasenhaube ausgebildetes Kanalsystem zum Zuführen des Beaufschlagungsgases in den Ringspalt aufweist, wobei das Beaufschlagungsgas in den Ringspalt durch die Außenwand des Vorsprungs strömbar ist.

Somit wird im Inneren der Nasenhaube das Beaufschlagungsgas zu dem Ringspalt geführt, so dass ein zusätzlicher Platz außerhalb der Nasenhaube für die Versorgung des Ringspalts mit dem Beaufschlagungsgas nicht vorgesehen zu werden braucht. Dadurch ist die Beaufschlagungseinrichtung platzsparend innerhalb der Nasenhaube ausgeführt.

Ferner ist bevorzugt, dass die Kopplungseinrichtung mindestens eine Labyrinthdichtung mit Labyrinthspitzen aufweist, die an der Außenwand des Vorsprungs und/oder der Innenwand des Laufrads angebracht sind.

Strömt das Beaufschlagungsgas durch die Labyrinthdichtung innerhalb des Ringspalts, d.h. um die Labyrinthspitzen, so bilden sich an den Labyrinthspitzen eine Vielzahl von Wirbeln aus, die den Strömungswiderstand des Beaufschlagungsgases in dem Ringspalt erhöhen. Dadurch ist die Dämpfungswirkung des Gaspolsters, das mit dem Beaufschlagungsgas innerhalb des Ringspalts ausgebildet ist, verbessert.

Bevorzugt weist die Kopplungseinrichtung eine Vielzahl von den Labyrinthdichtungen auf, zwischen denen jeweils das Beaufschlagungsgas zum Beaufschlagen der Labyrinthdichtungen in den Ringspalt zuführbar ist.

Die Labyrinthdichtungen sind einzeln individuell gestaltbar, so dass innerhalb des Ringspalts ein an die Rotordynamik des Turbomaschinenrotors angepasstes Beaufschlagungsprofil erzeugbar ist. So können die einzelnen Labyrinthdichtungen in Axialrichtung des Turbomaschinenrotors und in dessen Radialrichtung unterschiedlich ausgebildet sein, so dass die einzelnen Dichtungen unterschiedliche Dämpfungs- und Steifigkeitseigenschaften haben.

Alternativ ist es bevorzugt, dass die Kopplungseinrichtung eine Wabendichtung mit Waben aufweist, die an der Außenwand des Vorsprungs und/oder der Innenwand des Laufrads angebracht sind.

Ferner ist es bevorzugt, dass die Kopplungseinrichtung eine Vielzahl von den Wabendichtungen aufweist, zwischen denen jeweils das Beaufschlagungsgas zum Beaufschlagen der Wabendichtung in den Ringspalt zuführbar ist.

Somit können die einzelnen Wabendichtungen unterschiedlich ausgebildet sein, so dass die einzelnen Wabendichtungen unterschiedliche Dämpfungs- und Steifigkeitseigenschaften haben.

Es ist bevorzugt, dass die Nasenhaube relativ zum Laufrad stationär festgelegt ist.

Dadurch ist die Versorgung des Ringspalts mit dem Beaufschlagungsgas innerhalb der Nasenhaube einfach zu bewerkstelligen, da zwischen der Nasenhaube und einer externen Quelle von dem Beaufschlagungsgas, die in der Regel auch stationär ist, keine Relativbewegung stattfindet.

Beim Betrieb der Turbomaschine rotiert das Laufrad und die Nasenhaube ist stationär. Dadurch bildet sich in dem Ringspalt eine Scherströmung aus, die eine hohe Dämpfung hat.

Bevorzugt ist die Turbomaschine ein Radialverdichter, der bevorzugt einen Einlaufkanal für das Laufrad und mindestens eine Strebe aufweist mit der die Nasenhaube in dem Einlaufkanal aufgehängt ist.

Die Strebe ist relativ zum Laufrad stationär stabil positioniert, wodurch Kräfte von dem Laufrad via der Kopplungseinrichtung auf die Nasenhaube über die Strebe zu dem Einlaufkanal übertragbar sind. Dadurch ist der Eingriff des Vorsprungs der Nasenhaube in das Laufrad sicher und maßgenau, so dass die Dämpfungswirkung der Kopplungseinrichtung effektiv ist.

Bevorzugt ist die Strebe aerodynamisch geformt.

Dadurch hat die Strebe in dem Einlaufkanal einen geringen aerodynamischen Widerstand, wodurch die Strömung in dem Einlaufkanal von der Strebe wenig gestört ist. Somit hat die Turbomaschine einen hohen Wirkungsgrad.

Ferner ist bevorzugt, dass die Strebe als eine Leitschaufel ausgebildet ist.

Dadurch, dass die Strebe in dem Einlaufkanal befestigt ist, ist sie stationär. Vorteilhaft ist die Strebe die Leitschaufel, so dass mittels der Strebe die Einlaufströmung in Richtung zu dem Laufrad entsprechend vorteilhaft umgelenkt werden kann. Dadurch ist vorteilhaft die Zuströmung zu dem Laufrad aerodynamisch manipulierbar.

Bevorzugt ist, dass durch die Strebe hindurch die Beaufschlagungseinrichtung mit dem Beaufschlagungsgas versorgbar ist.

Dadurch wird das Beaufschlagungsgas von außerhalb des Einlaufkanals durch die Strebe hindurch in das Innere der Nasenhaube geführt. Im Inneren der Nasenhaube ist das Kanalsystem vorgesehen, durch das das Beaufschlagungsgas bis zu der Außenwand des Vorsprungs geführt wird, wobei von der Außenwand des Vorsprungs aus das Beaufschlagungsgas in den Ringspalt strömt.

Bevorzugt ist das Beaufschlagungsgas ein Prozessgas der Turbomaschine.

Beim Austreten des Beaufschlagungsgases aus dem Ringspalt vermischt sich das Beaufschlagungsgas mit dem Prozessgas der Turbomaschine. Da das Beaufschlagungsgas die gleiche Zusammensetzung hat, wie das Prozessgas, findet eine Verunreinigung des Prozessesgases durch das Beaufschlagungsgas nicht statt. Ferner kann vorteilhaft das Beaufschlagungsgas von der Turbomaschine abgezapft werden und eine separate Quelle für das Beaufschlagungsgas braucht nicht vorgesehen zu sein.

Bevorzugt weist die Turbomaschine mindestens eine verstellbare Leitschaufel auf, die zwischen der Strebe und dem Laufrad angeordnet ist.

Mittels der Leitschaufel kann vorteilhaft die Zuströmung zu dem Laufrad positiv manipuliert werden, so dass das Laufrad einen hohen Wirkungsgrad hat.

Im Folgenden werden bevorzugte Ausführungsbeispiele eines erfindungsgemäßen Turboverdichters anhand der beigefügten schematischen Zeichnungen erläutert. Es zeigt:
- Fig. 1: eine Schnittansicht des erfindungsgemäßen Turboverdichters,
- Fig. 2: Detail X aus Fig. 1,
- Fig. 3: Detail Y aus Fig. 2,
- Fig. 4: eine erste Ausführungsform der Kopplungseinrichtung,
- Fig. 5: eine zweite Ausführungsform der Kopplungseinrichtung,
- Fig. 6: eine dritte Ausführungsform der Kopplungseinrichtung,
- Fig. 7: eine vierte Ausführungsform der Kopplungseinrichtung,
- Fig. 8: ein erstes Beispiel eines herkömmlichen Turboverdichters und
- Fig. 9: ein zweites Beispiel eines herkömmlichen Turboverdichters.

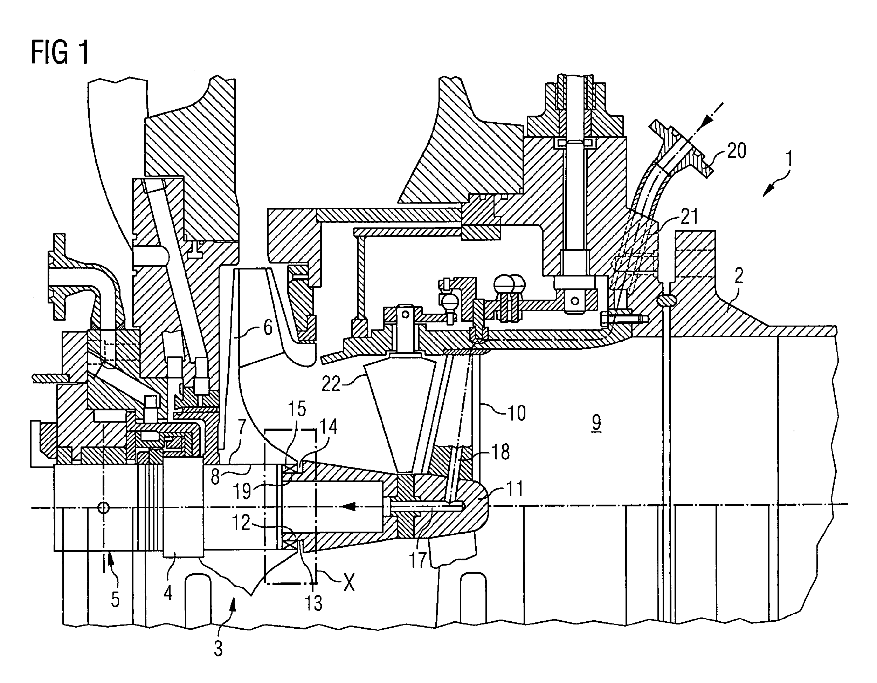

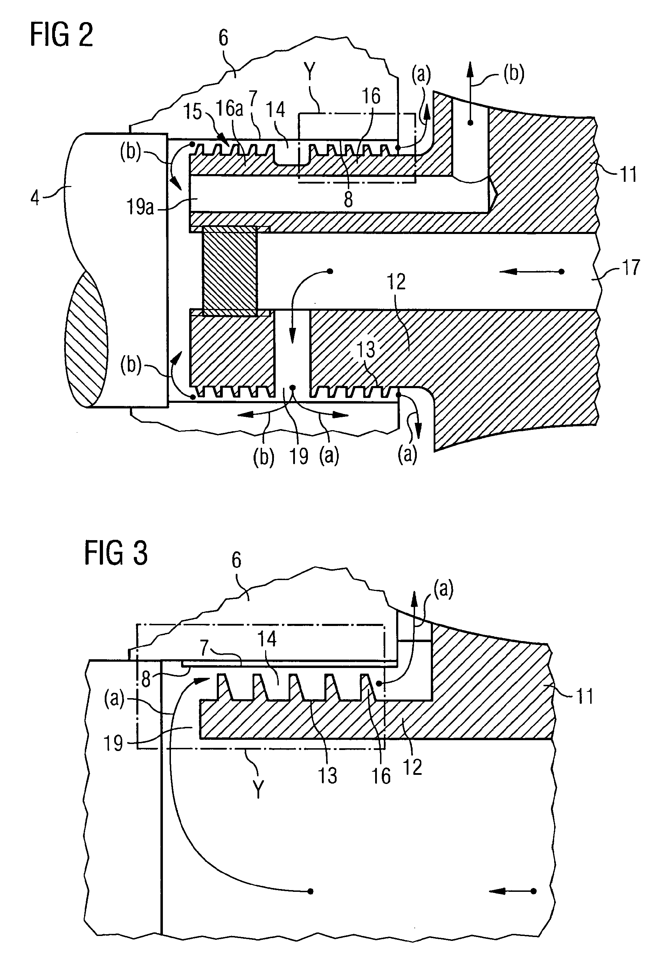

Wie es aus Fig. 1 bis 3 ersichtlich ist, weist ein Turboverdichter 1 ein Gehäuse 2 und einen Turboverdichterrotor 3 auf, der von dem Gehäuse 2 umgeben ist. Der Turboverdichterrotor 3 weist eine Welle 4 auf, die an einer Lagerstelle 5 an dem Gehäuse 2 abgestützt ist. Ferner weist der Turboverdichterrotor 3 ein Laufrad 6 auf, das an der Welle 4 befestigt ist. Das Laufrad 6 ist bezogen auf die Lagerstelle 5 fliegend gelagert angeordnet. Das Laufrad 6 weist eine Wellenbohrung 7 auf, in die die Welle 4 eingreift, wobei die Welle 4 die Wellenbohrung 7 nicht vollständig durchdringt. Die Wellenbohrung 7 ist begrenzt von ihrer Innenwand 8, an der die Welle 4 fest anliegt.

Der Turboverdichter 1 weist einen Einlaufkanal 9 auf, durch den die Zuströmung zu dem Laufrad 6 geführt wird. Das Laufrad 6 ist ein Radialverdichterrad mit axialer Zuströmungscharakteristik, wobei der Einlaufkanal 9 in Axialrichtung des Turboverdichterrotors 3 angeordnet ist.

In dem Einlaufkanal 9 ist eine Strebe 10 befestigt, an der eine Nasenhaube 11 befestigt ist, die zentrisch in dem Einlaufkanal 9 angeordnet ist. Die Nasenhaube 11 weist einen Vorsprung 12 auf, der von dem Einlaufkanal 9 her in die Wellenbohrung 7 eingreift. Der Vorsprung 12 weist eine Außenwand 13 auf, die in der Wellenbohrung 7 angesiedelt ist. Dadurch, dass die Strebe 10 die Nasenhaube 11 zentrisch in dem Einlaufkanal 9 hält, ist die Außenwand 13 des Vorsprungs 12 konzentrisch zu der Innenwand 8 der Wellenbohrung 7 angeordnet. Dadurch ist zwischen der Innenwand 8 der Wellenbohrung 7 und der Außenwand 13 des Vorsprungs 12 ein Ringspalt 14 ausgebildet.

In dem Ringspalt 14 ist eine Labyrinthdichtung 15 vorgesehen, die zwei axial hintereinanderliegenden Labyrinthen 16, 16a aufweist. Die Labyrinthe 16, 16a sind auf der Außenwand 13 des Vorsprungs 12 aufgezogen und sind im Abstand zu der Innenwand 8 der Wellenbohrung 7 angeordnet.

Innerhalb der Nasenhaube 11 ist ein Kanalsystem 17 vorgesehen, mit dem der Ringspalt 14 mit einem Beaufschlagungsgas versehen wird. Das Kanalsystem weist einen Kanalsystemeintritt 18, in den das Beaufschlagungsgas in das Kanalsystem 17 einströmt und einen Kanalsystemaustritt 19 auf, der an der Außenwand 13 des Vorsprungs 12 angesiedelt ist. Der Kanalsystemaustritt 19 ist unter anderem zwischen den beiden Labyrinthen 16 angesiedelt, so dass zwischen den beiden Labyrinthen 16 das Beaufschlagungsgas in den Ringspalt 14 strömt.

Das Gehäuse 2 weist einen Zuführstutzen 20 und eine Zuführleitung 21 auf, via denen das Beaufschlagungsgas zu der Strebe 10 geführt wird. Die Strebe 10 ist hohl ausgeführt und ist mit ihrem Hohlraum an den Kanalsystemeintritt 18 an der Nasenhaube 11 gasleitend anschlossen, so dass von dem Zuführstutzen 20 via die Zuführleitung 21, die Strebe 10, den Kanalsystemeintritt 18, das Kanalsystem 17 und den Kanalsystemaustritt 19 zwischen den Labyrinthen 16, 16a in den Ringspalt 14 das Beaufschlagungsgas geführt ist.

Das durch das Kanalsystem 17 strömende Beaufschlagungsgas teilt sich in den Strom (a) durch den Kanalsystemaustritt 19 über das Labyrinth 16 in den Raum unmittelbar vor dem Laufrad 6 und in den Strom (b) über das Labyrinth 16a in den Abstandsraum zwischen dem Vorsprung 12 der Welle 4, von wo aus es durch eine stirnseitige Öffnung 19a ebenfalls in den Raum unmittelbar vor dem Laufrad 6 abgeleitet wird.

Während das durch die Kanalsystemaustritte 19 strömende Beaufschlagungsgas entlang den Labyrinthen 16, 16a durch den Ringspalt 14 strömt, bildet es dabei einen Gaspolster aus.

Beim Betrieb des Turboverdichters 1 rotiert der Turboverdichterrotor 3. Aufgrund des rotordynamischen Verhaltens des Turboverdichterrotors 3 erfährt dieser eine Biegeschwingung, die zu einer dynamischen Radialbewegung des Laufrads 6 führt. Im Gegensatz zum Turboverdichterrotor 3 ist die Nasenhaube 11 mittels der Strebe 10 in dem Einlaufkanal 9 stabil und stationär gehalten. Dadurch bildet sich insbesondere eine radiale Relativbewegung zwischen der Außenwand 13 des Vorsprungs 12 und der Innenwand 18 der Wellenbohrung 7 aus, wodurch der Ringspalt 14 seine Gestalt dynamisch ändert. Dadurch wird die Dicke des Gaspolsters, der in dem Ringspalt 14 ausgebildet ist, verändert, wodurch der Gaspolster abgestützt an der Nasenhaube 11 auf das Laufrad dämpfend wirkt. Dadurch wird die dynamische Radialbewegung des Laufrads 6 eingeschränkt, so dass das rotordynamische Verhalten des Turboverdichterrotors 3 verbessert ist.

Beim Betrieb des Turboverdichters 1 rotiert der Turboverdichterrotor 3 und somit das Laufrad 6. Da die Nasenhaube 11 stationär angeordnet ist, bildet sich in dem Ringspalt 14 eine Scherströmung in dem Gaspolster aus. Dadurch hat der Gaspolster eine hohe Dämpfungswirkung.

Der Turboverdichter 1 weist ferner ein verstellbares Leitrad 22 auf, das in Axialrichtung des Turboverdichterrotors 3 gesehen zwischen dem Laufrad 6 und der Strebe 10 angeordnet ist. Mittels des verstellbaren Leitrads 22 kann die Zuströmung zu dem Laufrad 6 so manipuliert werden, insbesondere mit einem Drall beaufschlagt werden, so dass das Laufrad 6 einen hohen thermodynamischen Wirkungsgrad hat.

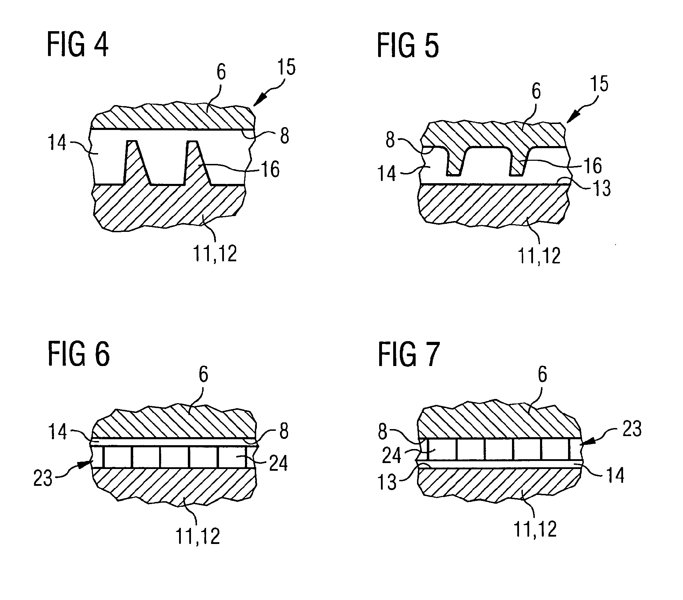

In Fig. 4 ist eine erste Ausführungsform der Kopplungseinrichtung schematisch gezeigt, wobei das Labyrinth 16 auf dem Vorsprung 12 der Nasenhaube 11 aufgebracht stationär gelagert ist. In dem Ringspalt 14 dem Labyrinth 16 gegenüberliegend angeordnet ist die relativ zu dem Labyrinth 16 bewegte Innenwand 8 der Wellenbohrung 7 des Laufrads 6 angesiedelt.

In Fig. 5 ist eine zweite Ausführungsform der Kopplungseinrichtung schematisch gezeigt, wobei das Labyrinth 16 an der Innenwand 8 der Wellenbohrung 7 angebracht ist, so dass das Labyrinth 16 relativ zu der Außenwand 13 des Vorsprungs 12 rotiert.

In Fig. 6 ist ein drittes Ausführungsbeispiel der Kopplungseinrichtung gezeigt, die mit der ersten Ausführungsform gemäß Fig. 4 vergleichbar ist, jedoch mit dem Unterschied, dass statt dem Labyrinth 16 eine Wabendichtung 23 mit einer Wabe 24 vorgesehen ist.

Die in Fig. 7 gezeigte vierte Ausführungsform der Kopplungseinrichtung ist mit der in Fig. 5 gezeigten zweiten Ausführungsform vergleichbar, wobei statt des Labyrinths 16 die Wabendichtung 23 mit der Wabe 24 vorgesehen ist.

### Bezugszeichenliste

- 1: Turboverdichter
- 2: Gehäuse
- 3: Turboverdichterrotor
- 4: Welle
- 5: Lagerstelle
- 6: Laufrad
- 7: Wellenbohrung
- 8: Innenwand der Wellenbohrung
- 9: Einlaufkanal
- 10: Strebe
- 11: Nasenhaube
- 12: Vorsprung
- 13: Außenwand des Vorsprungs
- 14: Ringspalt
- 15: Labyrinthdichtung
- 16, 16a: Labyrinth
- 17: Kanalsystem
- 18: Kanalsystemeintritt
- 19: Kanalsystemaustritt
- 19a: Öffnung
- 20: Zuführstutzen
- 21: Zuführleitung
- 22: verstellbares Leitrad
- 23: Wabendichtung
- 24: Wabe
- 101: Turboverdichter
- 102: Gehäuse
- 103: Turboverdichterrotor
- 104: Welle
- 105: Lagerstelle
- 106: Laufrad
- 107: Einlaufkanal
- 108: verstellbare Leitschaufel
- 109: Strebe
- 110: rotierende Nasenhaube
- 111: stationäre Nasenhaube

## Patentansprüche

1. Nasenhaube für einen Turbomaschinenrotor (3), der ein zu einer Lagerstelle (5) des Turbomaschinenrotors (3) fliegend angeordnetes Laufrad (6) aufweist, wobei die Nasenhaube (11) zur Führung einer axialen Zu- und/oder Abströmung des Laufrads (6) an dieses axial anschließbar ist und eine Kopplungseinrichtung aufweist, mit der das Laufrad (6) und die Nasenhaube (11) radial mechanisch koppelbar sind, so dass das Schwingungsverhalten des Turbomaschinenrotors (3) beeinflussbar ist.

2. Nasenhaube gemäß Anspruch 1,
wobei das Laufrad (6) eine von außen zugängliche Wellenbohrung (7) mit einer zylindrischen Innenwand (8) aufweist und die Kopplungseinrichtung einen Vorsprung (12) mit einer zylindrischen Außenwand (13), der in die Wellenbohrung (7) unter Ausbilden eines zylindrischen Ringspalts (14) zwischen der Außenwand (13) des Vorsprungs (12) und der Innenwand (8) der Wellenbohrung (7) einsetzbar ist, und eine Beaufschlagungseinrichtung aufweist, mit der der Ringspalt (14) zum Dämpfen der Schwingung des Turbomaschinenrotors (3) mit Beaufschlagungsgas beaufschlagbar ist.

3. Nasenhaube gemäß Anspruch 2,
wobei die Beaufschlagungseinrichtung ein in der Nasenhaube (11) ausgebildetes Kanalsystem (17) zum Zuführen des Beaufschlagungsgases in den Ringspalt (14) aufweist, wobei das Beaufschlagungsgasgas in den Ringspalt (14) durch die Außenwand (13) des Vorsprungs (12) strömbar ist.

4. Nasenhaube gemäß Anspruch 3,
wobei die Kopplungseinrichtung mindestens eine Labyrinthdichtung (15) mit Labyrinthspitzen (16) aufweist, die an der Außenwand (13) des Vorsprungs (12) und/oder der Innenwand (8) der Wellenbohrung (7) angebracht sind.

5. Nasenhaube gemäß Anspruch 4,
wobei die Kopplungseinrichtung eine Vielzahl von den Labyrinthdichtungen (15) aufweist, zwischen denen jeweils das Beaufschlagungsgas zum Beaufschlagen der Labyrinthdichtungen (15) in den Ringspalt (14) zuführbar ist.

6. Nasenhaube gemäß Anspruch 3,
wobei die Kopplungseinrichtung eine Wabendichtung (23) mit Waben (24) aufweist, die in der Außenwand (13) des Vorsprungs (12) und/oder der Innenwand (8) der Wellenbohrung (7) angebracht sind.

7. Nasenhaube gemäß Anspruch 4,
wobei die Kopplungseinrichtung eine Vielzahl von Wabendichtungen (23) aufweist, zwischen denen jeweils das Beaufschlagungsgas zum Beaufschlagen der Wabendichtungen (23) in den Ringspalt (14) zuführbar ist.

8. Turbomaschine mit einem Turbomaschinenrotor (3), der ein zu einer Lagerstelle (5) des Turbomaschinenrotors (3) fliegend angeordnetes Laufrad (6) aufweist, und einer Nasenhaube (11) nach einem der Ansprüche 1 bis 7, wobei das Laufrad (6) und die Nasenhaube (11) mittels der Kopplungseinrichtung radial gekoppelt sind, so dass das Schwingungsverhalten des Turbomaschinenrotors (3) beeinflussbar ist.

9. Turbomaschine gemäß Anspruch 8,
wobei die Nasenhaube (11) relativ zum Laufrad (6) stationär festgelegt ist.

10. Turbomaschine gemäß Anspruch 8 oder 9,
wobei die Turbomaschine ein Radialverdichter (1) ist.

11. Turbomaschine gemäß Anspruch 10,
wobei der Radialverdichter (1) einen Einlaufkanal (9) für das Laufrad (6) und mindestens eine Strebe (10) aufweist, mit der die Nasenhaube (11) in dem Einlaufkanal (1) aufgehängt ist.

12. Turbomaschine gemäß Anspruch 11,
wobei die Strebe (10) aerodynamisch geformt ist.

13. Turbomaschine gemäß Anspruch 12,
wobei die Strebe (10) als eine Leitschaufel ausgebildet ist.

14. Turbomaschine gemäß einem der Ansprüche 11 bis 13,
wobei durch die Strebe (10) hindurch die Beaufschlagungseinrichtung mit dem Beaufschlagungsgas versorgbar ist.

15. Turbomaschine gemäß einem der Ansprüche 8 bis 14,
wobei das Beaufschlagungsgas ein Prozessgas der Turbomaschine ist.

16. Turbomaschine gemäß einem der Ansprüche 11 bis 15,
wobei die Turbomaschine mindestes eine verstellbare Leitschaufel (22) aufweist, die zwischen der Strebe (10) und dem Laufrad (6) angeordnet ist
